(19) Europäisches Patentamt
European Patent Office
Office européen des brevets

(11) **EP 4 372 942 A1**

(12) **EUROPEAN PATENT APPLICATION**

(43) Date of publication:
**22.05.2024 Bulletin 2024/21**

(21) Application number: **22214136.8**

(22) Date of filing: **16.12.2022**

(51) International Patent Classification (IPC):
**H02J 3/00** (2006.01)     **B60L 53/63** (2019.01)
**H02J 13/00** (2006.01)

(52) Cooperative Patent Classification (CPC):
**H02J 3/003; B60L 53/63; H02J 13/00002;**
H02J 2203/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.11.2022 US 202263426268 P**

(71) Applicant: **Hitachi Energy Ltd
8050 Zürich (CH)**

(72) Inventors:
• **KNEZOVIC, Katarina
8006 Zürich (CH)**
• **GIUNTOLI, Marco
64521 Groß-Gerau (DE)**
• **HILLIARD, Antony Foster
Montréal, Québec H2E1W4 (CA)**

(74) Representative: **Vossius & Partner
Patentanwälte Rechtsanwälte mbB
Siebertstraße 3
81675 München (DE)**

(54) **SYSTEM AND METHOD FOR PEAK LOAD POWER MANAGEMENT FOR CHARGING OF AN ELECTRIC VEHICLE FLEET AND/OR OPERATION OF A MICROGRID**

(57) Operators typically utilize techno-economic means to set peak power demand in power infrastructure sites, such as power depots and microgrids. However, conventional means tend to either produce sub-optimal values of peak power demand or be too computationally expensive to be performed in a real-time or scalable manner. Accordingly, disclosed embodiments utilize a sliding time window to continuously or periodically determine peak power demand in past, current, and future portions of a current time period. These embodiments are able to determine an optimal peak power demand for the current time period, while remaining computationally feasible for real-time performance and being scalable with the complexity of optimization.

FIG. 1

## Description

## BACKGROUND

Field of the Invention

The embodiments described herein are generally directed to energy management, and, more particularly, to managing peak power demand of a power infrastructure site, such as a power depot or microgrid.

Description of the Related Art

The power flow patterns that a power grid must withstand depend on the peak power demand of grid participants. Thus, electric power draw by large loads can affect the reliable operation of distribution grids. For example, electric-vehicle (EV) depots can introduce detrimental effects on the power grid when power draw is uncontrolled, since the load of an electric vehicle is substantially higher than a typical residential or commercial load, and can result in uncertainty as to the future peak power demand.

Thus, controlling the peak power demand of a power infrastructure site to a predictable, consistent level can aid technical operation of the power infrastructure site and the grid. On one hand, the power infrastructure site is encouraged to limit its peak power demand. On the other hand, the power capability of charging equipment at a power infrastructure site, such as a power depot (e.g., EV depot), is typically oversized, in order to deal with seasonal variations, maintenance outages, and unplanned events.

Heavy commercial or industrial peak power demands may be limited by hardware or contracts. However, overall socio-technical effectiveness is improved when utility agreements incentivize grid participants to regulate their own peak power. Thus, setting an optimal peak power demand at the point of common coupling to the power grid, subject to future uncertainties, is generally the responsibility of the operator of the power infrastructure site.

The operator will typically utilize techno-economic means to set the peak power demand. These techno-economic means may include financial mechanisms (e.g., ratio of cost to peak kilowatt), applied over regular time periods (e.g., monthly billing periods), that reduce power demand at the point of common coupling between the power infrastructure site and the power grid.

If the peak power demand of a power infrastructure site affects operation of the power grid during a billing period, the utility may consequently charge the power infrastructure site a penalty over the billing period. The inventors have recognized that the retroactive aspect of this consequence means that the relative benefit versus penalty of peak power demand varies over the billing period. Near the start of the billing period, there is a long, uncertain future for which it is difficult to set the optimal peak power demand for the power infrastructure site. Underestimating the peak power demand for the billing period risks missing out on potential operational benefits, such as faster charging, on-time performance, more reserve capacity, and/or the like. Overestimating the peak power demand for the billing period imposes unnecessarily large loads on the power grid, which may result in penalties from the utility.

Control of peak power demand has conventionally been managed using estimates (e.g., based on historical behavior), heuristics (e.g., based on expected utilization), ratcheting (e.g., using a past peak power demand and expanding as required), or optimization. Some nondeterministic, but sub-optimal, solutions to controlling peak power demand include always using the maximum power of the equipment as early as possible, allowing manual setting (e.g., overriding) of the power limit based on human estimates, using heuristic estimates, using the historically observed peak power demand, potentially corrected for influencing factors (e.g., using a linear regression), and using on-site energy storage to mitigate potential overconsumption before increasing the peak power demand in the billing period.

While an optimization model is a good means to determine the optimal peak power demand over a billing period, the size of the optimization model may become too large to solve in a timely manner. The optimization model may also require data that are not always available, such as operation schedules (e.g., of EV fleets) and price forecasts. In addition, in practice, disturbances and other unexpected events will occur, which will require re-solving the optimization model. This may result in delays to scheduled operations.

Conventional methods use fixed peak power demand, do not address uncertainty, and/or are not scalable. Examples of such methods include U.S. Patent No. 10,647,209 B2, U.S. Patent No. 10,320,203 B2, U.S. Patent No. 11,262,718 B2, U.S. Patent No. 9,840,156 B2, and U.S. Patent No. 8,762,189 B2. The present disclosure addresses one or more of the problems in these methods discovered by the inventors.

## SUMMARY

Accordingly, systems, methods, and non-transitory computer-readable media are disclosed for managing peak power demand of a power infrastructure site, such as a power depot (e.g., EV depot) or microgrid. An objective of certain embodiments is to determine optimal peak power demand for a time period (e.g., fixed billing period) that is at least partially in the future. A further objective of certain embodiments is to account for uncertainty in the future portion of the time period.

In an embodiment, a method comprises using at least one hardware processor to: advance a sliding time window from a start time to an end time of a time period, in real time, wherein a length of the sliding time window is less than a length of the time period; and after each of a plurality of advances of the sliding time window within the time period, determine a past value of a parameter of a power infrastructure site that occurred in a past portion of the time period that spans at least from the start time of the time period to before a start of the sliding time window, determine a current value of the parameter in the sliding time window, based on an operating configuration of the power infrastructure site output by a model for a current portion of the time period that spans the sliding time window, determine a future value of the parameter in a future portion of the time period that spans at least from an end of the sliding time window to the end time of the time period, based on a forecast of the parameter, and determine an output value of the parameter for the time period based on the past value, the current value, and the future value.

In an embodiment, the parameter is power demand, and each of the past value, the current value, the future value, and the output value is a value of peak power demand. The method may further comprise using the at least one hardware processor to, after one or more of the plurality of advances of the sliding time window within the time period, set the determined output value as the peak power demand during operation of the power infrastructure site over a remaining portion of the time period.

In an embodiment, the past value is an extremum of the parameter in the past portion of the time period, the current value is an extremum of the parameter in the current portion of the time period, and the future value is an extremum of the parameter in the future portion of the time period, and determining the output value comprises selecting a most extreme value of the parameter from the past value, the current value, and the future value.

In an embodiment, the time period is a fixed billing period for which a utility, which supplies power to the power infrastructure site, bills an operator of the power infrastructure site for power used by the power infrastructure site.

In an embodiment, the start of the sliding time window corresponds to a current time, and the end of the sliding time window corresponds to a future time within the time period.

In an embodiment, the forecast of the parameter comprises a probability distribution of a value of the parameter in the future portion of the time period. Determining the future value may comprise selecting a value of the parameter from the probability distribution based on a value of a risk tolerance parameter. The method may further comprise using the at least one hardware processor to receive a user input indicating the value of the risk tolerance parameter.

In an embodiment, the method further comprises using the at least one hardware processor to execute a forecast model to generate the forecast of the parameter.

In an embodiment, the method further comprises using the at least one hardware processor to, after one or more of the plurality of advances of the sliding time window within the time period, set the determined output value as a control value for the power infrastructure site. The method may further comprise using the at least one hardware processor to initiate control of the power infrastructure site, based on the output value determined after one or more of the plurality of advances of the sliding time window within the time period.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which one or more of the processes described herein, may be implemented, according to an embodiment;
FIG. 2 illustrates an example processing system, by which one or more of the processes described herein, may be executed, according to an embodiment;
FIG. 3 illustrates an example distribution network of a power infrastructure site, according to an embodiment;
FIG. 4 illustrates example data flows between various components of an optimization infrastructure, according to an embodiment;
FIG. 5 illustrates the operation of an example process for determining the value of a parameter (e.g., peak power demand) of a power infrastructure site, according to an embodiment; and
FIG. 6 illustrates an example process for determining the value of a parameter (e.g., peak power demand) of a power infrastructure site, according to an embodiment.

## DETAILED DESCRIPTION

In an embodiment, systems, methods, and non-transitory computer-readable media are disclosed for managing peak power demand of a power infrastructure site, such as a power depot or microgrid. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

The term "power infrastructure site" refers to any infrastructure with clearly defined electrical boundaries. Generally, a power infrastructure site will comprise an electrical distribution network with interconnected loads, and is capable of being independently controlled. For example, a power infrastructure site may be a power depot and/or microgrid comprising a plurality of infrastructure assets. However, a power infrastructure site could also consist of a single infrastructure asset. An infrastructure asset may comprise a power generator, energy storage system, load, and/or any other component of the power infrastructure site.

The term "power depot" refers to any power infrastructure site that comprises at least one charging station configured to be electrically connected to a flexible load to charge a battery of the flexible load and/or discharge the battery of the flexible load. It should be understood that a power depot may also comprise inflexible loads. As one example, a power depot may be an electric vehicle (EV) depot that provides private charging for a fleet of electric vehicles for a municipal mass transit system, business, utility provider, or other entity, public charging for personal electric vehicles, private charging for personal electric vehicles (e.g., at the residence of the owner of the personal electric vehicle), and/or the like.

The term "microgrid" refers to any power infrastructure site that comprises a local electric grid that is capable of operating independently from the rest of the electric grid. A microgrid may comprise a plurality of infrastructure assets (e.g., generator(s), energy storage system(s), load(s), and/or the like), connected through a local distribution network, under the same point of common coupling. The infrastructure assets of a microgrid will generally comprise at least some type of power generator or energy storage system, but may comprise any combination of infrastructure assets. It should be understood that a power depot and microgrid are not mutually exclusive, and that, in some instances, a power infrastructure site may comprise both a power depot and a microgrid.

The term "flexible load" refers to any load that has flexibility in at least one characteristic that can be represented by a variable in an optimization model. One such characteristic may be a location at which the flexible load is charged or discharged. A flexible load with flexibility in location can be charged or discharged at any of a plurality of locations in one or a plurality of power infrastructure sites. Another such characteristic may be the timing at which the flexible load is charged or discharged. A flexible load with flexibility in timing can be charged or discharged according to different timings in terms of start time, end time, time ranges, time durations, and/or the like. Another such characteristic may be the power flow rate at which the flexible load is charged or discharged. A flexible load with flexibility in power flow rate can be charged at any of a plurality of different power flow rates (e.g., at any power flow rate within a range of power flow rates). Another such characteristics may be the operational state of the flexible load. A flexible load with flexibility in operational state (e.g., water heater, air conditioning, compressor, etc.) can be transitioned to another state that reduces power consumption (e.g., low-power mode, turned off, discharge, etc.) to increase the amount of energy available to other loads and/or decrease the total amount of consumed energy. It should be understood that these are simply examples of characteristics, and that the flexible load may be flexible in terms of other characteristics, even if not specifically described herein. A flexible load may be flexible in terms of only one characteristic, all characteristics, or any subset of characteristics. In contrast, the term "inflexible load" refers to any load that is not flexible in any characteristic.

In a contemplated embodiment, the flexible load is an electric vehicle, and the power infrastructure site is an EV depot. Electric vehicles may be flexible at least with respect to their locations. In other words, because an electric vehicle is mobile, an electric vehicle can generally be charged at any of a plurality of available charging stations within any one of a plurality of EV depots. In particular, the electrical vehicle comprises an on-board battery that can be electrically connected to any of a plurality of available charging stations within the EV depot. Similar types of flexible loads include, without limitation, drones, robotic systems, mobile machines, mobile devices, power tools, and the like.

However, the disclosed approach is not limited to electric vehicles or other mobile loads. Rather, the disclosed approach may be applied to any load, whether mobile or stationary, as long as the load has one or more flexible characteristics that can be defined in terms of variable(s) in an optimization model. For example, a flexible load may simply consist of a stationary or mobile battery, or may be a system that consumes power without having any on-board battery to store power. A stationary flexible load will generally not have flexibility in location, but may have flexibility in terms of timing, power flow rate, operational state, and/or the like. For purposes of the present disclosure, it is generally assumed that a flexible load comprises or consists of an energy store. While the energy store will primarily be described herein as a battery, it should be understood that the energy store may comprise or consist of any other mechanism or component for storing energy, such as a supercapacitor, compressed gas, and/or the like.

A power infrastructure site may also comprise one or more flexible power generators. The term "flexible power generator" refers to any power generator which can be controlled to either increase and/or decrease the amount of power that is generated. Examples of flexible power generators include, without limitation, a diesel generator, a hydrogen fuel cell, distributed energy resources whose power output can be curtailed, and/or the like. Optimization of a power infrastructure site can optimize variables for both the flexible loads and the flexible power generators.

As used herein, the term "distribution network" refers to the interconnection of electrical components, within a power infrastructure site, that distributes power to the flexible loads. These electrical components may comprise one or more intermittent and/or non-intermittent distributed energy resources, including renewable energy resources (e.g., solar power generator, wind power generator, geothermal power generator, hydroelectric power generator, fuel cell, etc.) and/or non-renewable energy resources (e.g., diesel generator, natural gas generator, etc.), one or more battery energy storage systems (BESSs), and/or like. Additionally or alternatively, in the event that the power infrastructure site comprises a power depot, these electrical components may comprise charging stations. Despite the term "charging," the term "charging station" encompasses a station that is capable of discharging a load (e.g., drawing power out of an on-board battery of the load) in addition to charging the load (e.g., supplying power to an on-board battery of the load), as well as a station that is only capable of charging a load and a station that is only capable of discharging a load. The electrical components in the power infrastructure site can be thought of as "nodes" of the distribution network, and electrical connections between these electrical components can be thought of as "edges" connecting the nodes within the distribution network. The distribution network of a power infrastructure site may be connected to other distribution networks (e.g., during normal operation) or may be isolated (e.g., in the case of a microgrid during independent operation).

1. Example Infrastructure

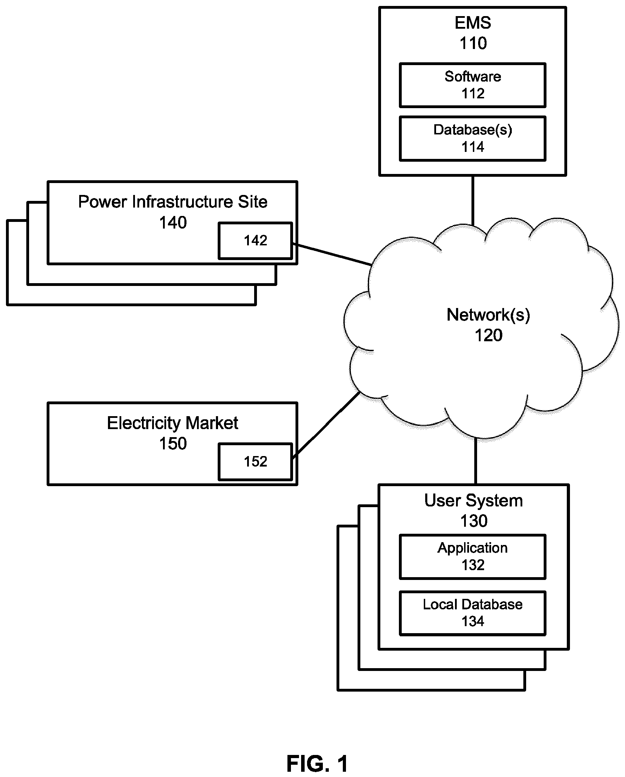

FIG. 1 illustrates an example infrastructure in which one or more of the disclosed processes may be implemented, according to an embodiment. The infrastructure may comprise an energy management system (EMS) 110 (e.g., comprising one or more servers) which hosts and/or executes one or more of the various functions, processes, methods, and/or software modules described herein. EMS 110 may comprise dedicated servers, or may instead be implemented in a computing cloud, in which the resources of one or more servers are dynamically and elastically allocated to multiple tenants based on demand. In either case, the servers may be collocated and/or geographically distributed. EMS 110 may also comprise or be communicatively connected to software 112 and/or one or more databases 114. In addition, EMS 110 may be communicatively connected to one or more user systems 130, power infrastructure sites 140, and/or electricity markets 150 via one or more networks 120.

Network(s) 120 may comprise the Internet, and EMS 110 may communicate with user system(s) 130, power infrastructure site(s) 140, and/or electricity market(s) 150 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), extensible Messaging and Presence Protocol (XMPP), Open Field Message Bus (OpenFMB), IEEE Smart Energy Profile Application Protocol (IEEE 2030.5), and the like, as well as proprietary protocols. While EMS 110 is illustrated as being connected to various systems through a single set of network(s) 120, it should be understood that EMS 110 may be connected to the various systems via different sets of one or more networks. For example, EMS 110 may be connected to a subset of user systems 130, power infrastructure sites 140, and/or electricity markets 150 via the Internet, but may be connected to one or more other user systems 130, power infrastructure sites 140, and/or electricity markets 150 via an intranet. Furthermore, while only a few user systems 130 and power infrastructure sites 140, one electricity market 150, one instance of software 112, and one set of database(s) 114 are illustrated, it should be understood that the infrastructure may comprise any number of user systems, power infrastructure sites, electricity markets, software instances, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of operator(s) of power infrastructure sites(s) 140 can interact, as users, with EMS 110. These interactions may comprise inputting data (e.g., parameters for configuring one or more of the processes described herein) and/or receiving data (e.g., the outputs of one or more processes described herein) via a graphical user interface provided by EMS 110 or an intervening system between EMS 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in one or more databases (e.g., database(s) 114).

EMS 110 may execute software 112, comprising one or more software modules that implement one or more of the disclosed processes. In addition, EMS 110 may comprise, be communicatively coupled with, or otherwise have access to one or more database(s) 114 that store the data input into and/or output from one or more of the disclosed processes. Any suitable database may be utilized, including without limitation MySQL™, Oracle™, IBM™, Microsoft SQL™, Access™, PostgreSQL™, and the like, including cloud-based databases, proprietary databases, and unstructured databases (e.g., MongoDB™).

EMS 110 may communicate with power infrastructure site(s) 140 and/or electricity market(s) 150 via an application programming interface (API). For example, EMS 110 may "push" data (i.e., transmit the data on its own initiative) to each power infrastructure site 140 via an API of a control system 142 of power infrastructure site 140. Control system 142 may be a Supervisory Control and Data Acquisition (SCADA) system. Alternatively or additionally, control system 142 of power infrastructure site 140 may "pull" data (i.e., initiate transmission of the data via a request) from EMS 110 via an API of EMS 110. Similarly, EMS 110 may push data to an electricity market interface 152 of electricity market 150 via an API of electricity market interface 152, and/or electricity market interface 152 may pull data from EMS 110 via an API of EMS 110.

### 2. Example Processing System

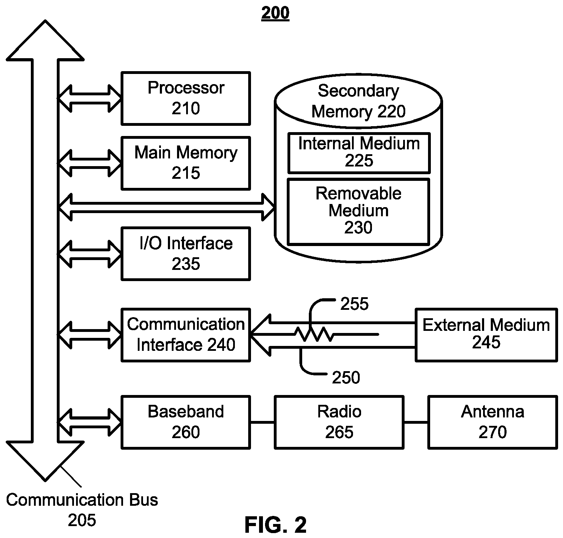

FIG. 2 is a block diagram illustrating an example wired or wireless system 200 that may be used in connection with various embodiments described herein. For example, system 200 may be used as or in conjunction with one or more of the functions, processes, or methods (e.g., to store and/or execute software 112) described herein, and may represent components of EMS 110, user system(s) 130, power infrastructure sites(s) 140, control system 142, electricity market interface 152, and/or other processing devices described herein. System 200 can be a server or any conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a slave processor subordinate to the main processing system (e.g., back-end processor), an additional microprocessor or controller for dual or multiple processor systems, and/or a coprocessor. Such auxiliary processors may be discrete processors or may be integrated with processor 210. Examples of processors which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor 210 is preferably connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 preferably includes a main memory 215 and may also include a secondary memory 220. Main memory 215 provides storage of instructions and data for programs executing on processor 210, such as one or more of the functions and/or modules discussed herein (e.g., software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

Secondary memory 220 may optionally include an internal medium 225 and/or a removable medium 230. Removable medium 230 is read from and/or written to in any well-known manner. Removable storage medium 230 may be, for example, a magnetic tape drive, a compact disc (CD) drive, a digital versatile disc (DVD) drive, other optical drive, a flash memory drive, and/or the like. Secondary memory 220 is a non-transitory computer-readable medium having computer-executable code (e.g., software 112) and/or other data stored thereon.

The computer software or data stored on secondary memory 220 is read into main memory 215 for execution by processor 210.

In alternative embodiments, secondary memory 220 may include other similar means for allowing computer programs or other data or instructions to be loaded into system 200. Such means may include, for example, a communication interface 240, which allows software and data to be transferred from external storage medium 245 to system 200. Examples of external storage medium 245 may include an external hard disk drive, an external optical drive, an external magneto-optical drive, and/or the like. Other examples of secondary memory 220 may include semiconductor-based memory, such as programmable read-only memory (PROM), erasable programmable read-only memory (EPROM), electrically erasable read-only memory (EEPROM), and flash memory (block-oriented memory similar to EEPROM).

As mentioned above, system 200 may include a communication interface 240. Communication interface 240 allows software and data to be transferred between system 200 and external devices (e.g. printers), networks, or other information sources. For example, computer software or executable code may be transferred to system 200 from a network server (e.g., platform 110) via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software and data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as software 112) is stored in main memory 215 and/or secondary memory 220. Computer programs can also be received via communication interface 240 and stored in main memory 215 and/or secondary memory 220. Such computer programs, when executed, enable system 200 to perform the various functions of the disclosed embodiments as described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), external storage medium 245, and any peripheral device communicatively coupled with communication interface 240 (including a network information server or other network device). These non-transitory computer-readable media are means for providing executable code, programming instructions, software, and/or other data to system 200.

In an embodiment that is implemented using software, the software may be stored on a computer-readable medium and loaded into system 200 by way of removable medium 230, I/O interface 235, or communication interface 240. In such an embodiment, the software is loaded into system 200 in the form of electrical communication signals 255. The software, when executed by processor 210, preferably causes processor 210 to perform one or more of the processes and functions described elsewhere herein.

In an embodiment, I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may also include optional wireless communication components that facilitate wireless communication over a voice network and/or a data network (e.g., in the case of user system 130 that is a smart phone or other mobile device). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

If the received signal contains audio information (e.g., a user system 130 comprising a smart phone or other mobile device), then baseband system 260 decodes the signal and converts it to an analog signal. Then the signal is amplified and sent to a speaker. Baseband system 260 also receives analog audio signals from a microphone. These analog audio signals are converted to digital signals and encoded by baseband system 260. Baseband system 260 also encodes the digital signals for transmission and generates a baseband transmit audio signal that is routed to the modulator portion of radio system 265. The modulator mixes the baseband transmit audio signal with an RF carrier signal, generating an RF transmit signal that is routed to antenna system 270 and may pass through a power amplifier (not shown). The power amplifier amplifies the RF transmit signal and routes it to antenna system 270, where the signal is switched to the antenna port for transmission.

Baseband system 260 is also communicatively coupled with processor(s) 210. Processor(s) 210 may have access to data storage areas 215 and 220. Processor(s) 210 are preferably configured to execute instructions (i.e., computer programs, such as the disclosed software) that can be stored in main memory 215 or secondary memory 220. Computer programs can also be received from baseband processor 260 and stored in main memory 210 or in secondary memory 220, or executed upon receipt. Such computer programs, when executed, enable system 200 to perform the various functions of the disclosed embodiments.

3. Example Power Infrastructure Site

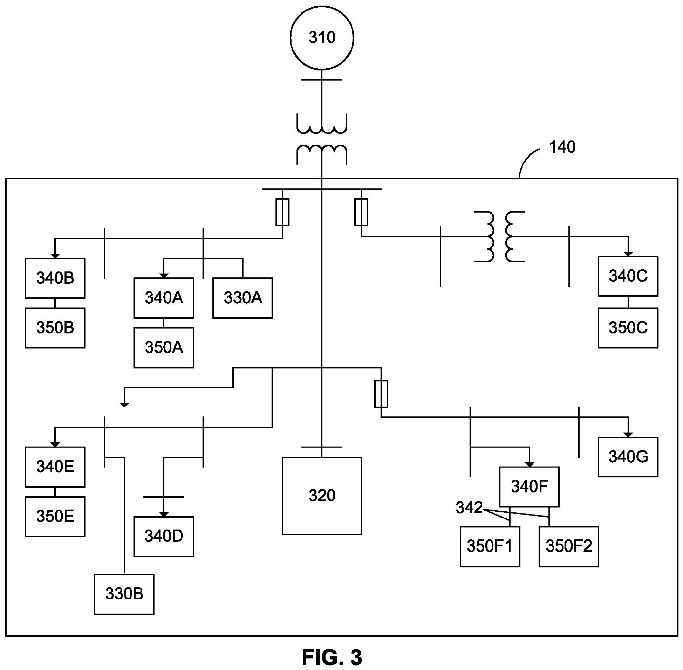

FIG. 3 illustrates a one-line diagram of an example distribution network of an example power infrastructure sites 140, according to an embodiment. As one non-limiting example, power infrastructure site 140 may be an EV depot for charging electric vehicles as flexible loads. Power infrastructure site 140 is connected to a power grid 310, from which electricity may be purchased (e.g., from electricity market 150). The purchase price of electricity may vary throughout each day (e.g., higher during the day than at night) and across days (e.g., higher on summer days than winter days), according to a time-of-use (ToU) rate. The ToU rate may assign peak rates, partial-peak rates, and off-peak rates to various time periods (e.g., each hourly interval in a day), representing the price of electricity during those time periods.

The distribution network of power infrastructure site 140 may comprise nodes representing one or a plurality of distributed energy resources in power infrastructure site 140, including, for example, one or a plurality of battery energy storage systems 320 and/or one or a plurality of power generators 330, illustrated as power generators 330A and 330B. Power generator(s) 330 may comprise renewable energy resources (e.g., solar power generator, wind power generator, geothermal power generator, hydroelectric power generator, fuel cell, etc.) and/or non-renewable energy resources (e.g., diesel generator, natural gas generator, etc.). For example, power generator 330A may be a solar power generator comprising a plurality of photovoltaic cells that convert sunlight into electricity, and power generator 330B may be a diesel generator that burns diesel gasoline to produce electricity.

The distribution network of power infrastructure site 140 may also comprise nodes representing one or a plurality of charging stations 340 in power infrastructure site 140. In the illustrated example, power infrastructure site 140 is a power depot comprising a plurality of charging stations 340A, 340B, 340C, 340D, 340E, 340F, and 340G. Each charging station 340 may comprise one or a plurality of chargers 342. For example, charging station 340F is illustrated with two chargers 342. Each charger 342 is configured to be electrically connected to a flexible load 350, so as to supply electricity to one or more energy stores (e.g. batteries) of the flexible load 350 and/or discharge electricity from one or more energy stores of the flexible load 350. In the case of supplying or charging a battery of a flexible load 350, electricity may flow from a power generator 330 and/or grid 310, through the distribution network, to the battery of the flexible load 350. Conversely, in the case of discharging a battery of a flexible load 350, electricity may flow from the battery of the flexible load 350 into the distribution network and into a battery energy storage system 320, grid 310, and/or another flexible load 350. At any given time, some chargers 342 may be connected to a flexible load 350, illustrated as flexible loads 350A, 350B, 350C, 350E, 350F1, and 350F2, whereas other chargers 342 may be unconnected to a flexible load 350 and available to receive an incoming flexible load 350.

In an embodiment, two or more power infrastructure sites 340 may be connected via a transmission network (not shown) or within the same distribution network. In this case, power can be transmitted between two power infrastructure sites 340. For example, a first power infrastructure site 140 may transmit power from one or more of its infrastructure assets (e.g., battery energy storage system(s) 320, power generator(s) 330, and/or flexible load(s) 350), over the network, to a second power infrastructure site 140, to charge one or more infrastructure assets (e.g., battery energy storage system(s) 320 and/or flexible load(s) 350) of the second power infrastructure site 140.

One or more charging stations 340 or individual chargers 342 may be configured to start charging a flexible load 350 (e.g., at a settable power flow rate), terminate charging of a flexible load 350, start discharging a flexible load 350 (e.g., at a settable power flow rate), terminate discharging of a flexible load 350, and/or the like, under the control of control system 142, EMS 110, and/or another controller. For example, a charging station 340 and/or charger 342 may comprise a processing system 200 that receives commands from a controller (e.g., control system 142 and/or EMS 110) via communication interface 240, processes the commands using processor 210 and main memory 215, and controls an actuator (e.g., one or more switches) to start or terminate charging or discharging according to the processed commands.

It should be understood that power infrastructure site 140 may comprise other loads, in addition to flexible loads 350. For example, power infrastructure site 140 may comprise auxiliary loads for operating various functions of power infrastructure site 140. However, even these auxiliary loads may be considered flexible loads 350 if they are flexible in at least one characteristic (e.g., operational state). It should also be understood that each battery energy storage system 320 can function as both a power source (i.e., when discharging) and a load (i.e., when charging), and can also be considered a flexible load 350.

Parameters (e.g., voltage, current, setpoint, etc.) of each node within the distribution network of power infrastructure site 140 may be monitored by EMS 110 and/or simulated by EMS 110 (e.g., during a load flow analysis). Thus, EMS 110 may monitor and/or simulate parameters of nodes within the distribution network, and control one or more physical components of power infrastructure site 140, such as charging station(s) 340, charger(s) 342, power generator(s) 330, battery energy storage system(s) 320, and/or the like, based on those parameters. This control may be performed periodically or in real time, and may be performed directly or indirectly (e.g., via control system 142).

The illustrated power infrastructure site 140 comprises a certain number of charging stations 340. However, it should be understood that a power infrastructure site 140 may comprise any number of charging stations 340, including only a single charging station 340. In addition, each charging station 340 may comprise any number of chargers 342, including only a single charger 342. In the simplest form, a power infrastructure site 140 could consist of a single charging station 340 consisting of a single charger 342, such as a charging station 340 in a residence, public parking spot, or the like. In addition, although all flexible loads 350 are illustrated as connected to a charging station, one or more flexible loads 350 may be connected to the distribution network without any intervening charging station 340.

A single EMS 110 may manage a single power infrastructure site 140 or a plurality of power infrastructure sites 140. In the case that EMS 110 manages a plurality of power infrastructure sites 140, the managed power infrastructure sites 140 may be identical to, similar to, or different than each other. For example, a homogeneous mixture of power infrastructure sites 140 may consist of a plurality of power depots for one or a plurality of fleets of electric vehicles. In contrast, a heterogeneous mixture of power infrastructure sites 140 may comprise a mix of power depot(s), residential charging station(s) 340, public charging station(s) 340, microgrid(s), and/or the like.

## 4. Example Data Flow

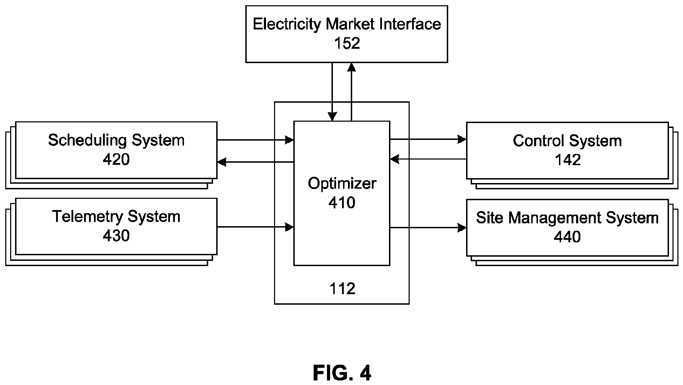

FIG. 4 illustrates example data flows between various components of an optimization infrastructure, according to an embodiment. Software 112, hosted on platform 110, may implement an optimizer 410. Optimizer 410 may generate an optimization model that outputs a target value, based on one or more variables and an input that comprises a schedule for one or more flexible loads 350 in one or more power infrastructure sites 140. The optimization model represents a concrete software-based implementation of an optimization problem. Optimizer 410 may solve the optimization model to determine values for the one or more variables that optimize the target value, subject to zero, one, or a plurality of constraints (e.g., inequality and/or equality constraints representing limitations on physical and/or technological capabilities, flexibility of loads and/or power generators, etc.). This optimization may comprise minimizing the target value (e.g., if the target value represents a cost) or maximizing the target value (e.g., if the target value represents a performance metric). The determined values of the variable(s) may represent an operating configuration (e.g., setpoints, schedules, etc.) of one or more power infrastructure sites 140 over a time period. Optimizer 410 may also initiate control of one or more physical components in one or more power infrastructure sites 140 based on the determined values for the one or more variables.

Optimizer 410 may update and solve the optimization model periodically, based on real-time or updated data. For example, the optimizer may update and solve the optimization model for operation of power infrastructure site(s) 140 in a sliding time window, representing an optimization period. The sliding time window continually or continuously advances to encompass the next time period for which operation of power infrastructure site(s) 140 is to be optimized. It should be understood that the start of the sliding time window may be the current time or some future time (e.g., 1 minute, 5 minutes, 10 minutes, 15 minutes, 30 minutes, 1 hour, 24 hours, etc., in the future), such that optimization is performed in advance of a future time period, encompassed by the sliding time window, for which the optimization is being performed. In an embodiment, the sliding time window may advance according to a time step (e.g., every 15 minutes), and utilize the most recent data available within a time range (e.g., a time range extending into the past that is equal in size to the time step). The size of the sliding time window may be any suitable duration (e.g., 15 minutes, 30 minutes, 1 hour, 24 hours, etc.).

Optimizer 410 may collect the data that it utilizes for optimization (e.g., as the input to the optimization model) from one or more scheduling systems 420, one or more telemetry systems 430, one or more control systems 142 of one or more power infrastructure sites 140, and/or one or more electricity market interfaces 152 of one or more electricity markets 150. It should be understood that these are simply examples of data flows, and that optimizer 410 may collect data from other systems (e.g., potentially including site management system(s) 440). For example, optimizer 410 may receive solutions from other optimizers, which may be incorporated into the input to the optimization model. In this case, optimizer 410 can focus on one aspect of an overall optimization, such that it does not have to integrate every detail of optimization into the optimization model.

In an embodiment, optimizer 410 may merge the collected data for a plurality of power infrastructure sites 140 into a single virtual site model, and perform a single holistic optimization of the virtual site model, to optimize operation of the plurality of power infrastructure sites 140 as a single unit. This virtual site model may represent a multi-tenant charging system-of-systems that aggregates a plurality of power infrastructure sites 140 (e.g., EV depots) for a plurality of tenants (e.g., EV fleet operators).

Optimizer 410 may output data to one or more scheduling systems 420, one or more control systems 142 of one or more power infrastructure sites 140, one or more site management systems 440, and/or one or more electricity market interfaces 152 of one or more electricity markets 150. It should be understood that these are simply examples of data flows, and that optimizer 410 may output data to other systems (e.g., potentially including telemetry system(s) 430). For example, optimizer 410 may output its solution or other data to one or more other optimizers, which may each incorporate this data into an input to its own optimization model. In this case, optimizer 410 can focus on one aspect of an overall optimization, such that it does not have to integrate every detail of optimization into the optimization model.

Scheduling system(s) 420, telemetry system(s) 430, and/or site management system(s) 440 may be hosted on EMS 110 or may be external to EMS 110. In either case, when collecting data, optimizer 410 may receive the data by either pulling the data from the respective system via an API of the respective system, or by the data being pushed by the respective system to optimizer 410 via an API of optimizer 410. Similarly, optimizer 410 may output data by either pushing the data to the respective system via an API of the respective system, or by the data being pulled by the respective system via an API of optimizer 410.

Each scheduling system 420 may manage the time tables and routing of flexible loads 350 (e.g., a fleet of electric vehicles). Optimizer 410 may receive schedule information from each scheduling system 420. The schedule information, provided by scheduling system 420, may comprise planned schedules for flexible loads 350. For example, the planned schedules may comprise, for each flexible load 350, a scheduled arrival time at which the flexible load 350 is expected to arrive at a power infrastructure site 140, a scheduled departure time at which the flexible load 350 is expected to depart from power infrastructure site 140, an auxiliary-task schedule defining a time period in which the flexible load 350 is expected to perform or undergo auxiliary tasks (e.g., preconditioning the cabin and/or battery of an electric vehicle, undergoing cleaning, maintenance, or repairs, etc.), a power flow schedule defining a power flow rate or profile for charging or discharging the flexible load 350, a priority of the flexible load 350 relative to other flexible loads 350 (e.g., indicating the relative cost of a delay in charging the flexible load 350), a preferred power infrastructure site 140 to be assigned to the flexible load 350, and/or the like. In addition, where flexible loads 350 have routes, the schedule information may comprise, for each flexible load 350, the route assigned to the flexible load 350.

After solving the optimization model, optimizer 410 may output data, associated with a scheduling system 420, to that scheduling system 420 or an intervening system. For example, in the event that optimizer 410 performs optimization for a plurality of power infrastructure sites 140, optimizer 410 may output a ranked list of power infrastructure sites 140, ordered, for instance, from the power infrastructure site 140 with the most capacity to the power infrastructure site 140 with the least capacity. Such information may be used by scheduling system 420 or an intervening system to update route assignments for flexible loads 350 (e.g., by re-routing one or more flexible loads 350 from a power infrastructure 140 with less capacity to a power infrastructure site 140 with greater capacity). Additionally or alternatively, optimizer 410 may output a ranked list of flexible loads 350, ordered, for instance, from the flexible load 350 that will be charged to an acceptable state of charge (SoC) first to the flexible load 350 that will be charged to an acceptable state of charge last (e.g., reflecting which electric vehicle can be readied first or unplugged the longest). As another example, optimizer 410 or an intervening system could provide recommendations to improve scheduling and/or provide data from which such recommendations may be derived. For instance, if flexible loads 350 are electric vehicles, such data may identify an electric vehicle that is frequently late, so that the electric vehicle's route can be changed (e.g., assigned to another electric vehicle, split with another electric vehicle, etc.). More generally, scheduling system 420 or an intervening system may analyze the data, provided by optimizer 410, to identify inefficiencies (e.g., bottlenecks, electric vehicles whose schedules require severely fast charging, etc.) in the schedule of flexible loads 350 and/or inaccurate parameters (e.g., actual energy consumed by pre-conditioning, etc.), and update the schedule of flexible loads 350 (e.g., re-optimize EV route assignments) to eliminate or mitigate those inefficiencies and/or reflect more accurate parameters.

Each telemetry system 430 may collect telemetric information for one or more flexible loads 350. A telemetry system 430 may be on board each flexible load 350, and transmit real-time telemetric information to optimizer 410. For example, in the event that flexible load 350 is an electric vehicle, telemetry system 430 may be embedded (e.g., as software or hardware) within an electronic control unit (ECU) of the electric vehicle and communicate over a wireless communication network (e.g., cellular communication network). Alternatively, telemetry system 430 may be external to flexible loads 350. In this case, telemetry system 430 may collect real-time telemetric information for a plurality of flexible loads 350, and forward or relay the collected telemetric information to optimizer 410 in real time. It should be understood that, as used herein, the terms "real-time" or "real time" contemplate, not only events which occur simultaneously, but also events which are separated by delays resulting from ordinary latencies in processing, communications, and/or the like, and/or resulting from the use of time steps (e.g., with respect to a sliding time window for optimization).

Optimizer 410 may receive the telemetric information from each telemetry system 430. The telemetric information, provided by telemetry system 430, may comprise one or more parameters for each flexible load 350 for which the transmitting telemetry system 430 collects data. For each flexible load 350, these parameter(s) may comprise the estimated arrival time of the flexible load 350 at the scheduled power infrastructure site 140, the current state of charge of the energy store (e.g., battery) on board the flexible load 350, and/or the like. It should be understood that these parameters may change over time, and that updated telemetric information, reflecting any changes, may be received periodically by optimizer 410 (e.g., and used as input to the optimization model for the current optimization period). The real-time telemetric information reduces uncertainty in the optimization model.

Each site management system 440 may manage infrastructure assets, including flexible loads 350, and staff within one or more power infrastructure sites 140. After solving the optimization model, optimizer 410 may output site information to each site management system 440. For example, this site information may comprise a ranked list of flexible loads 350, ordered, for instance, from the flexible load 350 that can be unplugged the longest amount of time to the flexible load 350 that can be unplugged the shortest amount of time. Such information may be used by site management system 440, for instance, to determine which flexible loads 350 can be serviced and/or the like. Additionally or alternatively, this site information may comprise an assignment or mapping of flexible loads 350 to charging stations 340. Such a mapping can be used to automatically route flexible loads 350 to their mapped charging stations 340, for example, by transmitting routing instructions, such as the location of the mapped charging station 340, to a navigation system within each flexible load 350.

Each control system 142 may provide independent control of a power infrastructure site 140. After solving the optimization model, optimizer 410 may output control information, associated with control of a power infrastructure site 140, to the control system 142 associated with that power infrastructure site 140. Such control information may be provided to the control system 142 of each power infrastructure site 140 that is managed by optimizer 410. The control information may comprise one or more control instructions that trigger one or more control operations at control system 142 and/or other information that is used during one or more control operations at control system 142. A control instruction may include, without limitation, an instruction to control a setpoint associated with a physical component of power infrastructure site 140 (e.g., a power flow rate associated with a charging station 340), an instruction to charge a flexible load 350, an instruction to discharge a flexible load 350, an instruction to perform pre-conditioning of a flexible load 350 (e.g., cooling of a cabin and/or battery of an electric vehicle, heating of a cabin of an electric vehicle, etc.), and/or the like. Other information may include, without limitation, a ranked list of charging stations 340 (e.g., ordered from charging stations 340 with the most capacity to charging stations 340 with the least capacity), a charging schedule for flexible loads 350, assignments or mappings of flexible loads 350 to charging stations 340, and/or the like.

Optimizer 410 may also receive data from each control system 142. For example, control system 142 may report events detected within the respective power infrastructure site 140 (e.g., a charger 342 of a charging station 340 being plugged into a flexible load 350), a state of charge detected for a plugged-in flexible load 350, an actual power flow or power flow rate between a charging station 340 and connected flexible load 350, and/or the like. These data may be received periodically by optimizer 410, and used as input to the optimization model for the current optimization period.

Electricity market interface 152 may provide an interface to an electricity market 150 in which the utility that operates grid 310 is a participant. In particular, electricity market 150 may enable an operator of a power infrastructure site 140 to purchase electricity from a utility or other energy provider (e.g., operating grid 310), sell electricity to an energy provider (e.g., operating grid 310), obtain service commitments from an energy provider, provide service commitments to an energy provider, and/or the like. Optimizer 410 may receive pricing information from electricity market interface 152. For example, this pricing information may comprise a forecast of the price for electricity from grid 310 in one or more future time periods (e.g., including the optimization period), uncertainty parameter(s) for the price forecast, applicable electricity tariffs, and/or the like. Optimizer 410 may incorporate this pricing information into the input to the optimization model. For example, the target value that is output by the optimization model may include an energy cost that is derived from the pricing information, in which case optimizing the target value may comprise minimizing the target value, and thereby the energy cost.

Optimizer 410 may receive a forecast of DER power generation from electricity market interface 152. Alternatively, optimizer 410 may receive a weather forecast from electricity market interface 152 or other external system (e.g., weather forecast service), and derive its own forecast of DER power generation. It should be understood that the power generated by renewable energy resources, such as solar power generators and wind power generators, may change significantly depending on the weather. Optimizer 410 may incorporate the forecast of DER power generation into the input to the optimization model, for example, to determine how much DER power generation will be available to power infrastructure site(s) 140 during the current optimization period.

Optimizer 410 may obtain service commitments from electricity market 150 via electricity market interface 152. For example, optimizer 410 may determine an energy demand required in the optimization period based on the solution to the optimization model (e.g., comprising the values for one or more variables in the optimization model that optimize the target value output by the optimization model). Optimizer 410 may transmit a request, for a service commitment for the determined energy demand in the respective optimization period from electricity market 150, to electricity market interface 152. In response, optimizer 410 may receive the requested service commitment for the energy demand in the respective optimization period from an energy provider via electricity market interface 152. If no energy provider on electricity market 150 will commit to the service, optimizer 410 may update and re-run the optimization model (e.g., with a constraint on the energy demand), and/or initiate or perform some other remedial action.

Optimizer 410 may obtain other services from electricity market 150 via electricity market interface 152. For example, optimizer 410 may receive service pricing for one or more services, offered by an energy provider on electricity market 150, from electricity market interface 152. Optimizer 410 may incorporate this service pricing into the input to the optimization model. Based on the solution to the optimization model, optimizer 410 may determine to purchase one or more services, and request a service commitment for the service(s) from electricity market 150 via electricity market interface 152. In response, optimizer 410 may receive the requested service commitment for the service(s) from electricity market interface 152. If no energy provider on electricity market 150 will commit to the service, optimizer 410 may update the input to the optimization model to exclude the service pricing and re-run the optimization model, and/or initiate or perform some other remedial action. In an embodiment, optimizer 410 may receive a schedule of requested service commitments via electricity market interface 152.

Optimizer 410 may provide service commitments to electricity market 150 via electricity market interface 152. For example, optimizer 410 may provide flexibility information for one or more power infrastructure site(s) 140 that it manages to electricity market 150 via electricity market interface 152. The flexibility information may comprise a curve of the price per kilowatt (kW) versus flexibility in the power infrastructure site(s) 140. An energy provider on electricity market 150 may purchase flexibility from optimizer 410 via electricity market interface 152. This flexibility can be utilized for curtailment (e.g., demand response) when needed. In an embodiment, optimizer 410 may receive a schedule of provided service commitments via electricity market interface 152.

It should be understood that the illustrated data flow is simply an example. Optimizer 410 may interface with fewer, more, or different sets of systems than those illustrated. Each system may be used to collect data to be incorporated into the input to the optimization model solved by optimizer 410 and/or as a destination for data output by optimizer 410. Additional examples of data that may be collected and used as input to the optimization model include, without limitation, the weather, the status of power infrastructure site(s) 140, financial figures related to power infrastructure site(s) 140, estimates of uncertainty (e.g., for planned schedules for flexible loads 350), and/or the like.

For example, optimizer 410 may interface with a weather forecast service to receive a weather forecast for the optimization period from the weather forecast service. The incorporation of weather forecasts into the optimization model can improve estimates of energy demand. For example, as discussed above, the weather forecast may be used to forecast DER generation, which can be incorporated into the input to the optimization model. Additionally or alternatively, optimizer 410 may utilize the weather forecast with a model of pre-conditioning to more accurately estimate the energy demand for pre-conditioning flexible loads 350. For instance, during relatively hot or cold time periods, more energy may be required to pre-condition (e.g., cool or heat) electric vehicles, than during temperate time periods.

It should be understood that the above examples are not limiting. Optimizer 410 may utilize other inputs and/or produce other outputs than those specifically described herein. Optimizer 410 may utilize a modular "building block" architecture, such that new inputs can be easily incorporated into the optimization model and/or existing inputs can be easily removed from the optimization model. Some of these inputs may represent solutions output by other optimization systems. In addition, as discussed in various examples, optimizer 410 may provide additional outputs (e.g., ranked lists) that describe capacity constraints of EV supply equipment (EVSE), such as charging stations 340. These additional outputs may be used by other systems (e.g., scheduling system 420, site management system 440, etc.), so that optimizer 410 does not have to integrate every detail of optimization.

5. Optimization

Optimizer 410 may solve an optimization model, implementing an optimization problem in software, for one or more power infrastructure sites 140. The optimization model may be generated from a model of power infrastructure site(s) 140. For example, a model of each power infrastructure site 140 that is managed by optimizer 410 may be stored in a data structure in memory (e.g., database(s) 114). The optimization model may be derived from a model of a single power infrastructure site 140 to optimize operation of the single power infrastructure site 140, or a model of a plurality of power infrastructure sites 140 to optimize operation across the plurality of power infrastructure sites 140. In an embodiment, the optimization model minimizes a target value that is based on one or more variables and an input that comprises a schedule for power generators 330 and/or flexible loads 350 in the power infrastructure site(s) 140 represented by the model of power infrastructure site(s) 140.

A variable may represent a controllable parameter within the power infrastructure site(s) 140. Examples of a controllable parameter include, without limitation, a setpoint of a physical component, an amount of power to be output by a distributed energy resource, a power flow rate at which to charge or discharge a flexible load 350, a state of charge to which to charge a flexible load 350 or battery energy storage system 320, a time at which to start charging or discharging a flexible load 350, a time at which to terminate charging or discharging of a flexible load 350, a time duration for charging or discharging a flexible load 350, an assignment or mapping of a flexible load 350 to a charging station 340 or power infrastructure site 140, or the like. Generally, the optimization model will include a plurality of variables, including potentially a mix of different types of controllable parameters. In an embodiment, the variable(s) in the optimization model at least include or relate to power consumption and/or power generation in power infrastructure site(s) 140.

Mathematically, the optimization model may be expressed as:

$$\min_{x} \left( f(x) + \sum^{K} g_k(x) \right), \qquad K \geq 0$$

subject to

$$ec_i(x) = 0, i = 1, ..., n_{ec}$$

$$ic_j(x) \leq 0, j = 1, ..., n_{ic}$$

wherein $x$ comprises values for all of the variable(s), $f(x)$ is a primary objective function that calculates the target value that is estimated to be produced by operation of power infrastructure site(s) 140 using $x$ as the values of the variables of operation, $ec$ represents an equality constraint, $n_{ec}$ represents the number of equality constraints ($n_{ec} \geq 0$), $ic$ represents an inequality constraint, and $n_{ic}$ represents the number of inequality constraints ($n_{ic} \geq 0$). It should be understood that primary objective function $f(x)$ represents the model of power infrastructure site(s) 140. Collectively, the values $x$ of the one or more variables represent an operating configuration of the power infrastructure site(s) 140.

As depicted, there may be zero, one, or a plurality of secondary objective functions $g(x)$. A secondary objective function $g(x)$ may penalize one or more attributes of values $x$ by adding to the target value that is output by primary objective function $f(x)$, in the same unit of measure (e.g., monetary cost) as primary objective function $f(x)$. Such penalization serves to bias the optimization model away from solutions with values $x$ that have those attribute(s). Alternatively, a secondary objective function $g(x)$ could reward one or more attributes of values $x$ by subtracting from the target value that is output by primary objective function $f(x)$, in the same unit of measure (e.g., monetary cost) as primary objective function $f(x)$. In contrast to penalization, rewarding serves to bias the optimization model towards solutions with values $x$ that have those attribute(s).

A solution to the optimization model may comprise values $x$ that minimize the target value, output as the sum of primary objective function $f(x)$ and any secondary objective functions $g(x)$, while satisfying all of the constraints (e.g., within a tolerance). In an embodiment, at least some of the constraints may be probabilistic constraints, as opposed to hard constraints. In addition, at least some of the constraints may restrict parameters associated with flexible loads 350 (e.g., parameters associated with electric vehicles).

In an embodiment in which the target value includes an energy cost, primary objective function $f(x)$ accounts for the energy price(s) during the optimization period when calculating the target value. For example, primary objective function $f(x)$ may determine a power demand profile produced by values $x$, and use the energy price(s) with the power demand profile (e.g., calculate a product of the power demand profile and the energy price(s)) to determine the target value as its output. Primary objective function $f(x)$ may also account for other costs that are associated with operation of power infrastructure site(s) 140 during the optimization period, such as grid fees, the cost of network services, indirect capital costs, and/or the like.

Primary objective function $f(x)$ and/or secondary objective function(s) $g(x)$, if any, may comprise mixed-integer programming, linear programming, quadratic programming, mixed-integer linear programming (MILP), mixed-integer quadratic programming (MIQP), and/or the like. In general, the use of linear programming may improve computational speed and scalability of the optimization model, which can be especially advantageous when primary objective function $f(x)$ and/or secondary objective function(s) $g(x)$, if any, comprise a large number of variables or other parameters (e.g., for a large number of flexible loads 350). There are numerous commercial and open-source modeling languages available to define objective function $f(x)$ and any secondary objective functions $g(x)$.

Objective function $f(x)$ and/or secondary objective function(s) $g(x)$, if any, may be trained in any known manner. For example, objective function $f(x)$ may be trained using supervised machine learning. In this case, a training dataset of $(X, Y)$, in which $X$ represents a set of historical values for the variable(s) and Y represents ground-truth target values for those historical values for the variable(s), may be used. In this case, the training may be expressed as:

$$min(Y - f(X))$$

wherein $f(X)$ (e.g., the weights in $f(X)$) is updated to minimize the error between the ground-truth target values $Y$ and the corresponding target values output by $f(X)$. Alternatively, objective function $f(x)$ may be trained in other manners using historical data. Any secondary objective function $g(x)$ may be trained in an identical, similar, or different manner as primary objective function $f(X)$ and/or together with primary objective function $f(X)$.

While the optimization model has been expressed herein as a minimization problem, it should be understood that the optimization model could instead be expressed herein as a maximization problem:

$$\max_{x} \left( f(x) + \sum^{K} g_k(x) \right), \qquad K \geq 0$$

subject to zero, one, or a plurality of constraints. However, in order to simplify the description, it will generally be assumed herein that the optimization model is cast as a minimization problem. A person of skill in the art will understand how to convert between a minimization and maximization problem, and which problem may be more appropriate in a given circumstance.

The optimization model is solved to determine values for the one or more variables that optimize the target value. In other words, the optimization model is evaluated to determine values $x$ that optimize (e.g., minimizes) the target value output by the optimization model. Solving the optimization model may comprise iteratively executing the optimization model using a different set of values $x$ in each iteration until the target value converges. After each iteration, values $x$ for the next iteration may be determined using any known technique (e.g., gradient descent). The target value may be determined to converge when it is within a tolerance from a specific value, when the rate of improvement to the target value over prior iterations satisfies a threshold (e.g., the rate of decrease in the target value falls below a threshold in a minimization problem), and/or when one or more other criteria are satisfied. Once the target value has converged, values $x$ that produced the final target value may be output as the solution to the optimization model. These values $x$ may represent an optimal operating configuration for the power infrastructure site(s) 140.

The optimization model may be a stochastic optimization model that is robust to uncertainties. The optimization model may be solved using any suitable technique. Such techniques include, without limitation, stochastic multi-stage optimization, chance-constrained optimization, Markowitz mean-variance optimization, and/or the like. There are numerous commercial and open-source solvers available to solve the optimization model.

In an embodiment, a plurality of optimization models, each comprising a different primary objective function $f(x)$, could be solved. Each primary objective function $f(x)$ may represent a different scenario. Such an embodiment may be used to evaluate a plurality of different "what-if" scenarios. Alternatively or additionally, each primary objective function $f(x)$ may represent a different objective. A final solution may be determined from the solutions output by the plurality of optimization models by selecting one of the solutions, combining the solutions in any suitable manner, or the like.

6. Process Overview

Embodiments of processes for determining peak power demand of a power infrastructure site 140, will now be described in detail. It should be understood that the described processes may be embodied in one or more software modules that are executed by one or more hardware processors, for example, as software 112 executed by processor(s) 210 of EMS 110. The described processes may be implemented as instructions represented in source code, object code, and/or machine code. These instructions may be executed directly by hardware processor(s) 210, or alternatively, may be executed by a virtual machine or container operating between the object code and hardware processors 210. In addition, the disclosed software may be built upon or interfaced with one or more existing systems.

Alternatively, the described processes may be implemented as a hardware component (e.g., general-purpose processor, integrated circuit (IC), application-specific integrated circuit (ASIC), digital signal processor (DSP), field-programmable gate array (FPGA) or other programmable logic device, discrete gate or transistor logic, etc.), combination of hardware components, or combination of hardware and software components. To clearly illustrate the interchangeability of hardware and software, various illustrative components, blocks, modules, circuits, and steps are described herein generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a component, block, module, circuit, or step is for ease of description. Specific functions or steps can be moved from one component, block, module, circuit, or step to another without departing from the invention.

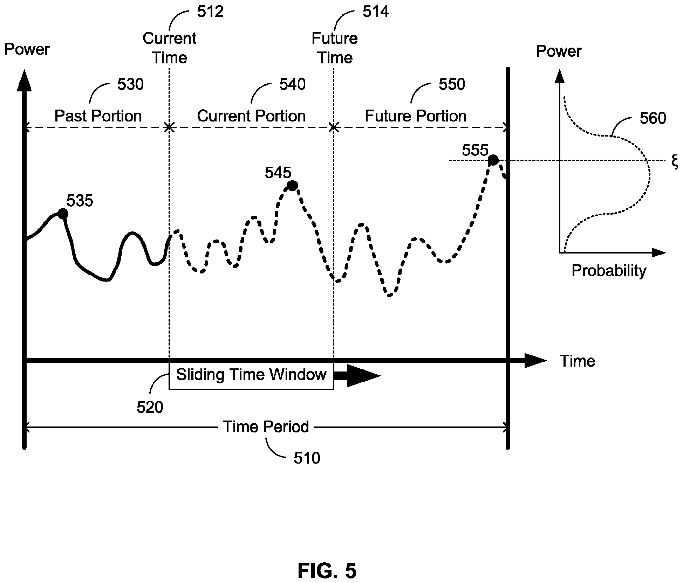

FIG. 5 illustrates the operation of an example process for determining the value of a parameter (e.g., peak power demand) of a power infrastructure site, according to an embodiment. While FIG. 5 illustrates only a single time period 510, the process may operate on each of a plurality of successive time periods 510. Each time period 510 may be a fixed time period or interval, such as the billing period (e.g., monthly billing period) for which a utility, which supplies power to a power infrastructure site 140, bills the operator of the power infrastructure site 140 for power used by the power infrastructure site 140.

A sliding time window 520 is advanced from a start time of the current time period 510 to the end time of the current time period 510, in real time. It should be understood that the current time period 510 refers to the particular time period 510 that includes the current time 512. The length of sliding time window 520, which may begin from the current time 512, is less than the total length of the time period 510. Thus, sliding time window 520 may span from the current time 512 to a future time 514 that is defined by the length of sliding time window 520. In other words, the start of sliding time window 520 corresponds to the current time 512 and the end of sliding time window 520 corresponds to a future time 514 within the current time period 510 that is defined by adding the length of sliding time window 520 to the current time 512. Sliding time window 520 may have any suitable length, such as one or more hours (e.g., one hour, six hours, twelve hours, etc.), one or more days (e.g., one day, two days, one week, etc.), or the like. In a particular embodiment, the length of sliding time window 520 is one day (i.e., twenty-four hours).

Sliding time window 520 may advance continuously or according to a time step from the start time to the end time of time period 510. When sliding time window 520 is described herein as advancing in real time, it should be understood that the term "real time" may include delays resulting from a time step, as well as ordinary latencies in data processing, communications, and/or the like. In an embodiment which utilizes time steps, the time step may consist of any suitable time interval, such as one or more seconds (e.g., one second, five seconds, ten seconds, fifteen seconds, thirty seconds, etc.), one or more minutes (e.g., one minute, five minutes, ten minutes, fifteen minutes, thirty minutes, etc.), one or more hours (e.g., one hour, six hours, twelve hours, etc.), one or more days (e.g., one day, two days, one week, etc.), or the like. In general, the time step may be defined based on the length of time period 510, and as a factor of multiplication where the product is the length of time period 510.

In an embodiment that utilizes a time step, the time step may be defined in relation to sliding time window 520. For example, the length of the time step could be the same as the length of sliding time window 520, could be a factor of multiplication where the product is the length of sliding time window 520, or could be otherwise related to the length of sliding time window 520. Alternatively, the length of the time step could be entirely independent of the length of sliding time window 520.

Sliding time window 520 divides the current time period 510 into a past portion 530, a current portion 540, and a future portion 550. Past portion 530 spans at least from the start time of the current time period 510 to before the start of sliding time window 520. In other words, past portion 530 is anchored to the start time of the current time period 510. In a preferred embodiment, past portion 530 spans the entire period from the start time of the current time period 510 up to the start of sliding time window 520. However, in an alternative embodiment, past portion 530 could span from the start time of the current time period 510 to some time that is a certain number of time units (e.g., 30 seconds, 1 minute, 10 minutes, 15 minutes, etc.) before the start of sliding time window 520. Current portion 540 spans at least a portion of sliding time window 520. In a preferred embodiment, current portion 540 spans the entire sliding time window 520, from start to end, so as to be coextensive with sliding time window 520. Future portion 550 spans at least from the end of sliding time window 520 to the end time of the current time period 510. In other words, future portion 540 is anchored to the end time of the current time period 510.

It should be understood that, at a first time point, when the current time 512 is the start time of the current time period 510, past portion 530 will have a length of zero. In addition, at a second time point, when the end of sliding time window 520 is the end time of the current time period 510, future portion 550 will have a length of zero. As sliding time window 520 advances from the first time point to the second time point, past portion 530 will increase in length, current portion 540 will maintain a fixed length (i.e., corresponding to the length of sliding time window 520), and future portion 550 will decrease in length. As sliding time window 520 advances from the second time point to the end of current time period 510, past portion 530 will continue to increase in length, while current portion 540 will decrease in length. During this time, sliding time window 520 could also decrease in length, or may instead remain a fixed length and extend into the next time period 510 (i.e., immediately subsequent to the current time period 510). However, it should be understood that, in an embodiment which utilizes time steps and in which the length of the time step is the same as the length of sliding time window 520, sliding time window 520 will not advance any further within the current time period 510 after the second time point, and would instead, advance to the next time period 510, if applicable.

After each advancement of sliding time window 520 within the current time period 510, a value of a parameter of a power infrastructure site 140 may be determined for each of past portion 530, current portion 540, and future portion 550. The value for each of past portion 530, current portion 540, and future portion 550 may be an extremum of the parameter in the respective portion of the current time period 510. In an embodiment, the parameter is power demand, and the value for each of past portion 530, current portion 540, and future portion 550 is the value of peak power demand for the respective portion. For example, a past value 535 of peak power demand in past portion 530 of the current time period 510 may be determined, a current value 545 of peak power demand in current portion 540 of the current time period 510 may be determined, and a future value 555 of peak power demand in future portion 550 of the current time period 510 may be determined.

As used herein, "power demand" refers to the power flow from grid 310 to power infrastructure site 140 through the point of common coupling, and "peak power demand" refers to the maximum power flow from grid 310 to power infrastructure site 140 through the point of common coupling over some period of time. However, it should be understood that a parameter other than power demand can be determined, and that a value other than a maximum (i.e., peak), such as a minimum, average, or the like, could be determined as the value of the parameter. Generally, past value 535, current value 545, and/or future value 555 may each be determined either from instantaneous values of the parameter across the respective portion of a time period 510, or from a smoothing function or other function that is applied to values of the parameter across the respective portion of the time period 510. One example of a smoothing function is a rolling average of the values of the parameter over a period of time (e.g., fifteen minutes). For example, peak power demand for past portion 530, current portion 540, and/or future portion 550 may be defined as the maximum of the rolling average of power demand over a period of time (e.g., fifteen minutes), rather than a maximum instantaneous power demand, across the respective portion of a time period 510.

Past value 535 may be determined with certainty based on historical values of the parameter in past portion 530. For example, when the value of the parameter being determined is peak power demand, the peak power demand for past portion 530 of the current time period 510 can be determined by simply finding the maximum power demand by power infrastructure site 140 (e.g., through the point of common coupling with grid 310) over past portion 530 of the current time period 510.

Current value 545 may be determined based on an operating configuration of the power infrastructure site 140 that is output by a model. For example, optimizer 410 may solve the optimization model for power infrastructure site 140 to determine the value of each of one or more variables, representing an operating configuration of power infrastructure site 140, during current portion 540, represented by sliding time window 520. Power consumption and/or power generation over current portion 540 of the current time period 510 may be derived from this operating configuration. For instance, values of the variable(s) (e.g., setpoints for battery energy storage system(s) 320, power generator(s) 330, charging station(s) 340, etc.) over current portion 540 may be used to plot power demand (e.g., power generation/discharge subtracted from power consumption for each of a plurality of time points) over current portion 540 of the current time period 510. Then, the peak power demand for current portion 540 of the current time period 510 can be determined by finding the maximum power demand in the plotted power demand. Generally, this peak power demand for current portion 540 of the current time period 510 represents the known near-future demand over the optimization horizon. Thus, there may be little to no uncertainty in current value 545.

Future value 555 may be determined based on a forecast of the parameter. Future value 555 may represent an uncertain estimate of the value of the parameter. Generally, the uncertainty associated with future value 555 will decrease as the amount of time remaining in the current time period 510 (i.e., the length of future portion 550) decreases.

In an embodiment, the forecast of the parameter may comprise a probability distribution 560 of a value of the parameter in future portion 550 of the current time period 510. Probability distribution 560 may be derived by executing one or more forecasting models that output the probability distribution 560 based on historical data (e.g., past power demand) and/or forecasted data (e.g., expected power demand, weather forecasts, etc.).

The determination of future value 555 may comprise selecting a value of the parameter from the probability distribution based on a value of a risk tolerance pa-

rameter $\xi$. For example, values or percentiles in the probability distribution may be associated with different values of the risk tolerance parameter $\xi$. The value of the risk tolerance parameter $\xi$ may be received as a user input via the graphical user interface provided by EMS 110, and/or may be derived from an amount of time remaining in the current time period 510 (i.e., the length of future portion 550). Future value 555 may be derived as a single value within probability distribution 560, defined by risk tolerance parameter $\xi$, or an average of a portion of probability distribution 560, defined by risk tolerance parameter $\xi$.

In an alternative embodiment, estimated values of power demand may be plotted over future portion 550 of the current time period 510 based on one or more forecasting models. Then, the peak power demand for future portion 550 of the current time period 510 can be determined by finding the maximum power demand in the plotted power demand.

After each advancement of sliding time window 520 or one or more advancements of sliding time window 520 within the current time period 510, an output value of the parameter may be determined for the current time period 510, based on past value 535, current value 545, and future value 555 for the current time period 510. For example, when the value of the parameter being determined is peak power demand, the output value is a value of peak power demand. In this case, the output value may be determined to be the maximum value from among past value 535, current value 545, and future value 555. More generally, past value 535 may be an extremum (e.g., minimum or maximum) of the parameter in past portion 530 of the current time period 510, current value 545 may be an extremum of the parameter in current portion 540 of the current time period 510, future value 545 may be an extremum of the parameter in future portion 550 of the current time period 510, and the output value may be determined by selecting the most extreme value of the parameter from past value 535, current value 545, and future value 555. However, it should be understood that some value other than a first-most extremum could be used for past value 535, current value 545, future value 555, and/or the output value, such as the second-most extremum, the third-most extremum, the average of all relevant values, the average of all extremums in the relevant values, or the like.

After each advancement of sliding time window 520 or one or more advancements of sliding time window 520 within the current time period 510, the determined output value of the parameter may be used during operation of power infrastructure site 140. For example, when the value of the parameter is peak power demand, the determined output value may be set as the peak power demand during operation of power infrastructure site 140 over a remaining portion of the current time period 510. More generally, the determined output value of the parameter may be set as a control value for power infrastructure site 140. In an embodiment, control of power infrastructure site 140 may be initiated based on the determined output value.

In an embodiment, the output value of the parameter may be used to inform future solutions to the optimization model of optimizer 410. For instance, when the value of the parameter is peak power demand, the determined peak power demand may be used as a soft or hard constraint when optimizer 410 subsequently solves the optimization model, for example, after the next advancement of sliding time window 520, to determine the optimal operating configuration for the next current portion 540 of the current time period 510. As one example, an inequality constraint (e.g., $ic(x)$) may be added to the optimization model, requiring the power demand of the solution to be less than or equal to the determined peak power demand. Thus, the optimization model can account for the optimal peak power demand while finding the optimal values $x$ for the objective function(s), to potentially exploit the future peak power demand in the present solution and for the remainder of the current time period 510.

Notably, the uncertainty of future value 555 of peak power demand will have an impact on the subsequent optimization by optimizer 410. In particular, when future value 555 ends up being lower than the eventual actual peak power demand in a time period 510, potential consequences include that power infrastructure site 140 pays more for energy than necessary, pays more for peak power demand in subsequent time periods 510 (e.g., due to a perceived increase in the risk that power infrastructure site 140 will exceed the peak power demand in future time periods 510), and/or has less flexibility during operation (e.g., in responding to unexpected events). Conversely, when future value 555 ends up being higher than the eventual actual peak power demand in a time period 510, the potential consequences include that power infrastructure site 140 pays more for peak power demand than necessary.

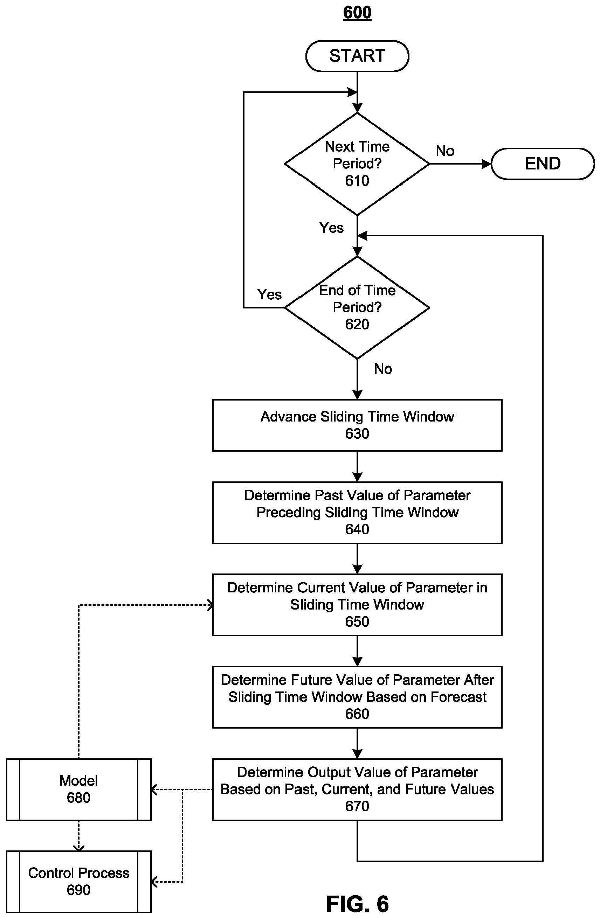

FIG. 6 illustrates an example process 600 for determining the value of a parameter (e.g., peak power demand) of a power infrastructure sites 140, according to an embodiment. Process 600 may be implemented by optimizer 410, by software 112 in combination with optimizer 410, or by software 112 independently from optimizer 410. While process 600 is illustrated with a certain arrangement and ordering of subprocesses, process 600 may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

Process 600 iterates through one or a plurality of time periods 510, as it operates on the current time period 510. The current time period 510 is the time period that includes the current time 512. In subprocess 610, it is determined whether or not to operate on the next time period 510, as it becomes the current time period 510. It should be understood that the next time period 510 will become the current time period 510 as soon as it contains the current time 512. If the next time period 510 is to be considered (i.e., "Yes" in subprocess 610), process 600 performs one or more inner iterations of subprocesses 620-670. Otherwise, if the next time period 510 is not to be considered (i.e., "No" in subprocess 610), process 600 may end. It is generally contemplated that process 600 will iterate continuously and indefinitely through successive time periods 510, in real time, for one or more power infrastructure sites 140 until an operator suspends or terminates process 600 (e.g., via a graphical user interface of EMS 110).

Iterations of the inner loop formed by subprocesses 620-670 may be performed according to a time step, as discussed elsewhere herein. In other words, an iteration of subprocesses 620-670 may be performed after each of a plurality of time steps within the current time period 510. Alternatively, iterations of subprocesses 620-670 may be performed continuously.

In subprocess 620, it is determined whether or not the current time period 510 has ended. If the current time period 510 has ended (i.e., "Yes" in subprocess 620), process 600 returns to subprocess 610 to determine whether or not to perform another outer iteration on the next time period 510, as it becomes the current time period 510. If the current time period 510 has not ended (i.e., No" in subprocess 620), process 600 performs an iteration of subprocesses 630-670. It should be understood that the current time period 510 is determined to have ended when the current time 512 is at or, if time steps are used, within one time step from, the end time of the time period 510 under consideration, or subsequent to the end time of the time period 510 under consideration. Conversely, the current time period 510 is determined to have not ended when the current time 512 is before the end time of the time period 510 under consideration, or, if time steps are used, a plurality of time steps before the end time of the time period 510 under consideration.

In subprocess 630, sliding time window 520 is advanced either continuously or by the time step, depending on the embodiment. Thus, it should be understood that subprocesses 640-670 are performed after each of a plurality of advances of sliding time window 520 within the current time period 510. While it is generally preferable that subprocesses 640-670 be performed after each and every advancement of sliding time window 520, in an alternative embodiment, subprocesses 640-670 could be performed only after a certain number of advancements of sliding time window 520 (e.g., an interval of plurality of time steps), according to any other pattern, or randomly. Advancement of sliding time window 520 will increase the length of past portion 530 of the current time period 510 and decrease the length of future portion 550 of the current time period 510. In an embodiment in which time steps are used, the length of past portion 530 will increase by the length of the time step, and the length of future portion 550 will decrease by the length of the time step.

In subprocess 640, a past value 535 of the parameter (e.g., peak power demand) of one or more power infrastructure sites 140 that occurred in a past portion 530 of the current time period 510 is determined. As discussed elsewhere herein, past portion 530 may span at least from the start time of the current time period 510 to before a start, and preferably up to the start, of sliding time window 520. Past value 535 can be determined with certainty from historical values of the parameter that have been recorded and stored (e.g., in database(s) 114) for past portion 530 of the current time period 510. For example, in an embodiment in which past value 535 is an extremum (e.g., minimum or maximum) of the parameter, past value 535 may be easily determined (i.e., with very low computational expense) as the extremum of the historical values of the parameter. In an embodiment in which the parameter is power demand, past value 535 may be determined as the maximum of the historical values of power demand in past portion 530 of the current time period 510.

In subprocess 650, a current value 545 of the parameter (e.g., peak power demand) of the one or more power infrastructure sites 140 to occur in a current portion 540 of the current time period 510 is determined. As discussed elsewhere herein, current portion 540 may span sliding time window 520 (i.e., from the start to the end of sliding time window 520). Current value 545 may be determined based on an operating configuration of the power infrastructure site(s) 140 that is output by a model 680 for current portion 540 of the current time period 510. Model 680 may be the optimization model of optimizer 410. For example, in an embodiment in which current value 545 is an extremum (e.g., minimum or maximum) of the parameter, current value 545 may be determined as the expected extremum of the parameter when the power infrastructure site(s) 140 are operated according to the operating configuration of power infrastructure site(s) 140 that solves the optimization model. In an embodiment in which the parameter is power demand, current value 545 may be determined as the maximum expected power demand through the point of common coupling with grid 310 (e.g., the difference between expected power consumption and expected power generation/discharge in power infrastructure site(s) 140), along the time span of current portion 540 of the current time period 510.

In subprocess 660, a future value 555 of the parameter (e.g., peak power demand) of the one or more power infrastructure sites 140 forecasted to occur in a future portion 550 of the current time period 510 is determined. As discussed elsewhere herein, future portion 550 may span at least from the end of sliding time window 520 to the end time of the current time period 510. Future value 555 may be determined based on a forecast of the parameter. The forecast of the parameter may comprise the output of one or more forecasting models. The forecasting model(s) may comprise predictive machine-learning models, chance-constrained optimization, and/or the like.

In an embodiment, the forecast of the parameter comprises a probability distribution 560 of a value of the parameter in future portion 550 of the current time period 510. In this case, subprocess 660 may comprise selecting the future value 555 of the parameter from probability distribution 560 based on a value of a risk tolerance parameter ξ. The value of risk tolerance parameter ξ may be received as a user input via the graphical user interface provided by EMS 110. In this case, risk tolerance parameter ξ represents a user-adjustable bias. Alternatively or additionally, risk tolerance parameter ξ may be based on the amount of time remaining in the current time period 510 (i.e., the length of future portion 550 of the current time period 510). For example, when the future value 555 is a peak power demand, as the amount of time remaining in the current time period 510 decreases, risk tolerance ξ may decrease, since the lost potential benefit from a higher future value 555 of peak power demand will increase. In general, a lower risk tolerance parameter ξ may result in a more probable future value 555 of peak power demand being selected or otherwise derived from probability distribution 560, whereas a higher risk tolerance parameter ξ may result in a less probable future value 555 of peak power demand being selected or otherwise derived from probability distribution 560.

Alternatively, the forecast of the parameter may take other forms. For example, optimizer 410 could perform an initial optimization once per time period 510 at the start of each time period 510, based on the schedule for the entire time period 510 (e.g., fixed billing period). This optimization may be performed by solving model 680, which may comprise the optimization model of optimizer 410, as discussed elsewhere herein. The operating configuration, produced by the optimization, may be used to determine the value of the parameter at a plurality of time points spanning the entire current time period 510. The values of the parameter remaining in future portion 550, after each advance of sliding time window 520 across the current time period 510, may then be used to determine future value 555. For example, if the parameter is power demand, the maximum value of power demand in future portion 550 may be determined as future value 555.

The forecast of the parameter may be based on historical values of the parameter, adjusted for one or more factors. These factor(s) may include expected utilization of infrastructure assets (e.g., flexible loads 350), forecasted weather, on-site power generation and/or storage, and/or the like. In an embodiment, a graphical user interface of EMS 110 may comprise one or more inputs that enable an operator of power infrastructure site(s) 140 to override the forecasted future value 555 of the parameter with a manually input value. In this case, if the operator does not wish to utilize the forecasting feature of disclosed embodiments, the operator could simply set future value 555 to zero. This setting may be specific to each position of sliding time window 520, specific to each time window 510, and/or global for all time windows 510. However, it should be understood that a manual override of future value 555 will frequently result in sub-optimal determinations of peak power demand for time periods 510.

In subprocess 670, an output value of the parameter (e.g., peak power demand) of the one or more power infrastructures 140 is determined based on past value 535, current value 545, and future value 555 of the parameter. If the objective is to determine the extremum (e.g., minimum or maximum) of the parameter, the output value may be determined as the most extreme value of the parameter from past value 535, current value 545, and future value 555 of the parameter. For example, if the value of the parameter is peak power demand, the output value may be determined as the maximum of past value 535, current value 545, and future value 555. Similarly, if the extremum is a minimum, the output value may be determined as the minimum of past value 535, current value 545, and future value 555. However, it should be understood that the output value may be determined in other manners (e.g., an average), depending on the parameter and the intended utilization of the output value.

In an embodiment, the output value of the parameter, determined in subprocess 670, may be provided to model 680 for optimization in a subsequent iteration of subprocess 650. Again, model 680 may be the optimization model of optimizer 410. As an example, if the value of the parameter is peak power demand, an inequality constraint (e.g., ic(x)) may be added to the optimization model, requiring the power demand of the solution to be less than or equal to the output value of peak power demand. It should be understood that this is not a necessity of any embodiment, and in an alternative embodiment, model 680 may operate independently without the output value of the parameter.

In an embodiment, peak power demand could be included as a secondary objective function g(x) in model 680, which may be the optimization model of optimizer 410. For example, the secondary objective function g(x) may be defined as follows:

$$g(x) = C_{PPD}(x) \frac{T_{Current\ Portion}}{T_{Future\ Portion}}$$

wherein $C_{PPD}$ is the cost (e.g., monetary cost) of the peak power demand, at the point of common coupling between power infrastructure site(s) 140 and grid 310, required by values $x$, $T_{Current\ Portion}$ is the length of current portion 540 of the current time period 510, and $T_{Future\ Portion}$ is the length of future portion 550 of the current time period 510. Notably, as future portion 550 decreases in length, the total cost output by secondary objective function g(x) will increase. Therefore, secondary objective function *g(x)* penalizes increases in the peak power demand, and increases the penalty as the end time of the current time period 510 approaches. In other words, the cost of raising the peak power demand near the end of the current time period 510 is greater than the cost of raising the peak power demand near the start of the current time period 510. This is because increasing the peak power demand earlier increases the benefit that can be obtained from the higher peak power demand by increasing the time over which the higher peak power demand can be utilized. In general, the earlier that the peak power demand is accurately set within the current time period 510, the longer that the peak power demand can be exploited during operation of power infrastructure site(s) 140 within the current time period 510.

In an embodiment, the output value of the parameter, determined in subprocess 670, is provided directly to a control process 690 for controlling operation of power infrastructure site(s) 140. For example, the output value of the parameter may be set as a control value in control process 690 in at least a subset of the iterations of subprocess 670. Thus, control process 690 may be initiated based on the output value determined in at least a subset of the iterations of subprocess 670. However, it should be understood that control using the determined output value of the parameter is not a necessity of any embodiment.

In an alternative or additional embodiment, the output value of the parameter, determined in subprocess 670, is provided to model 680 (e.g., the optimization model of optimizer 410), which is used to determine an optimal operating configuration for control process 690 to implement in power infrastructure asset(s) 140. Control process 690 may comprise configuring one or more physical components in the power infrastructure site(s) 140 based on the determined values *x* in the solution of model 680, representing an optimal operating configuration. These physical components may comprise physical infrastructure assets, such as battery energy storage system(s) 320, power generator(s) 330, charging station(s) 340, charger(s) 342, flexible load(s) 350, auxiliary load(s), and/or the like.

As discussed elsewhere herein, the solution to the optimization model comprises the values for the one or more variables (i.e., *x*) that optimized the target value of the objective function(s). Values *x* may represent an operating configuration for power infrastructure site(s) 140. For example, values *x* may comprise, for each flexible load 350, a future charging pattern (e.g., power flow rate, charging time period, etc.) that charges flexible load 350 to a target state of charge by a scheduled time.

In the case that flexible load 350 is an electric vehicle, the scheduled time may be a departure time, and the target state of charge may be a state of charge required for the electric vehicle to complete its scheduled route. The charging may also include or otherwise account for pre-conditioning of the electric vehicle (e.g., cooling an electric vehicle before its departure, pre-conditioning the battery of an electric vehicle, etc.), as well as charging the battery of the electric vehicle. However, pre-conditioning may be a flexible operating state that can be terminated or foregone, when necessary to charge an electric vehicle by its scheduled departure time, or when optimizer 410 determines that the power can be better used elsewhere.

Control process 690 may comprise optimizer 410 generating and transmitting control information to one or more control systems 142. Each control system 142 may then control physical component(s) in its respective power infrastructure site 140. Alternatively, optimizer 410 could control the physical component(s) directly (i.e., without an intervening control system). In either case, the control may comprise setting a setpoint of a physical component, actuating a switch, turning a physical component on or off or otherwise changing a physical or operating state of a physical component, and/or the like. A setpoint of a physical component may comprise a value of voltage, current, output power, input power, power flow rate, state of charge, temperature, or the like. For example, the control may comprise controlling the setpoint(s) (e.g., output power) of non-intermittent distributed energy resources. It should be understood that, while intermittent distributed energy resources (e.g., solar or wind power generators or other generators that depend on weather) could be controlled in a similar manner, intermittent distributed energy resources can typically only be controlled to curtail output power to less than their potential output power, which essentially wastes energy.

In an embodiment, control process 690 may be performed periodically to determine values *x*, representing the operating configuration of the power infrastructure site(s) 140, from model 680. For example, control process 690 may be executed after each advancement of sliding time window 520 (e.g., continuously or according to a time step), to control the power infrastructure site(s) 140 to conform to the operating configuration determined by model 680 for current portion 540 of the current time period 510. In other words, model 680 is simultaneously used to determine an optimal operating configuration of power infrastructure site(s) 140 for control process 690 to use in current portion 540 of the current time period 510, and to determine a current value 545 of the parameter (e.g., peak power demand) in current portion 540 of the current time period 510 for subprocess 650. The periodic execution of control process 690 may be performed automatically after each advance of sliding time window 520 (i.e., without user intervention) or semi-automatically (e.g., with user confirmation) after each advancement of sliding time window 520.

## 7. Example Embodiments

Disclosed embodiments determine the optimal value of a parameter for operation of a power infrastructure site 140 (e.g., power depot, such as an EV depot with or without power generation/storage, a microgrid, etc.) during a time period 510, in the presence of uncertainty about a future portion 550 of the time period 510. The optimal value of the parameter for the entire time period 510 is determined based on a certain past value 535, an expected current value 545 resulting from optimization, and an uncertain future value 555 determined by forecasting. This can improve effective utilization by power infrastructure site 140 of the point of common coupling with grid 310 in the presence of future uncertainty (e.g., to improve the performance of an EV fleet by ensuring on-time charging), increase the consistency of the power consumption by power infrastructure site 140 that grid 310 must support, reduce total operational costs of power infrastructure site 140, flexibly incorporate a variety of data sources, and/or flexibly incorporate a variety of billing rules (e.g., energy tariffs, peak power tariffs, etc.) imposed by the utility operating grid 310.

In addition, since disclosed embodiments only require optimization within a sliding time window 520, the optimal value of the parameter can be determined in a computationally fast, feasible, and scalable manner. To increase speed and scalability, the optimization may be formulated as a linear optimization model. In contrast, conventional systems that optimize the entire time period 510 may become computationally impractical (e.g., too slow, insufficient data, etc.) as the number of variables that must be optimized increases (e.g., as the size of an EV fleet of power infrastructure site 140 increases).

In an embodiment, the value of the parameter being optimized is peak power demand. If the optimal value of peak power demand is higher than the presently set value of peak power demand, increasing the set value of peak power demand to the higher optimal value, enables power infrastructure site 140 to obtain the benefits of the higher peak over the remainder of the current time period 510. For example, if the peak power demand is forecast to be higher in future portion 550 than the presently set value of peak power demand and that forecasted value of peak power demand will impact the utility bill for power infrastructure site 140 (e.g., via a peak power tariff), the peak power demand may be preemptively set to the forecasted value of peak power demand to exploit the higher value of peak power demand for a longer period of time (i.e., with the addition of the time between the current time 512 and the time at which the forecasted peak power demand is estimated to occur), to thereby diminish the impact to the utility bill. Without disclosed embodiments, the benefit of the peak power demand would only be obtainable from the time at which it occurs until the end of the current time period 510. With the disclosed embodiments, the benefit of the peak power demand can be obtained from the earlier of the time at which it occurs and the time at which it is forecast, until the end of the current time period 510.

Embodiment 1: A method comprising using at least one hardware processor to: advance a sliding time window from a start time to an end time of a time period, in real time, wherein a length of the sliding time window is less than a length of the time period; and after each of a plurality of advances of the sliding time window within the time period, determine a past value of a parameter of a power infrastructure site that occurred in a past portion of the time period that spans at least from the start time of the time period to before a start of the sliding time window, determine a current value of the parameter in the sliding time window, based on an operating configuration of the power infrastructure site output by a model for a current portion of the time period that spans the sliding time window, determine a future value of the parameter in a future portion of the time period that spans at least from an end of the sliding time window to the end time of the time period, based on a forecast of the parameter, and determine an output value of the parameter for the time period based on the past value, the current value, and the future value.

Embodiment 2: The method of Claim 1, wherein the parameter is power demand, and wherein each of the past value, the current value, the future value, and the output value is a value of peak power demand.

Embodiment 3: The method of Embodiment 2, further comprising using the at least one hardware processor to, after one or more of the plurality of advances of the sliding time window within the time period, set the determined output value as the peak power demand during operation of the power infrastructure site over a remaining portion of the time period.

Embodiment 4: The method of any preceding Embodiment, wherein the past value is an extremum of the parameter in the past portion of the time period, the current value is an extremum of the parameter in the current portion of the time period, and the future value is an extremum of the parameter in the future portion of the time period, and wherein determining the output value comprises selecting a most extreme value of the parameter from the past value, the current value, and the future value.

Embodiment 5: The method of any preceding Embodiment, wherein the time period is a fixed billing period for which a utility, which supplies power to the power infrastructure site, bills an operator of the power infrastructure site for power used by the power infrastructure site.

Embodiment 6: The method of any preceding Embodiment, wherein the start of the sliding time window corresponds to a current time, and wherein the end of the sliding time window corresponds to a future time within the time period.

Embodiment 7: The method of any preceding Embodiment, wherein the forecast of the parameter comprises a probability distribution of a value of the parameter in the future portion of the time period.

Embodiment 8: The method of Embodiment 7, wherein determining the future value comprises selecting a value of the parameter from the probability distribution based on a value of a risk tolerance parameter.

Embodiment 9: The method of Embodiment 8, further comprising using the at least one hardware processor to receive a user input indicating the value of the risk tolerance parameter.

Embodiment 10: The method of any preceding Embodiment, further comprising using the at least one hardware processor to execute a forecast model to generate the forecast of the parameter.

Embodiment 11: The method of any preceding Embodiment, further comprising using the at least one hardware processor to, after one or more of the plurality of advances of the sliding time window within the time period, set the determined output value as a control value for the power infrastructure site.

Embodiment 12: The method of Embodiment 11, further comprising using the at least one hardware processor to initiate control of the power infrastructure site, based on the output value determined after one or more of the plurality of advances of the sliding time window within the time period.

Embodiment 13: A system comprising: at least one hardware processor; and software configured to, when executed by the at least one hardware processor, perform the method of any preceding Embodiment.

Embodiment 14: A non-transitory computer-readable medium having instructions stored thereon, wherein the instructions, when executed by a processor, cause the processor to perform the method of any one of Embodiments 1 through 12.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are openended. For instance, "A comprises B" means that A may include either: (i) only B; or (ii) B in combination with one or a plurality, and potentially any number, of other components. In contrast, the terms "consisting of," "consist of," and "consists of' are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

**Claims**

1. A method comprising using at least one hardware processor to:

   advance a sliding time window from a start time to an end time of a time period, in real time, wherein a length of the sliding time window is less than a length of the time period; and
   after each of a plurality of advances of the sliding time window within the time period,

      determine a past value of a parameter of a power infrastructure site that occurred in a past portion of the time period that spans at least from the start time of the time period to before a start of the sliding time window,
      determine a current value of the parameter in the sliding time window, based on an operating configuration of the power infrastructure site output by a model for a current portion of the time period that spans the sliding time window,
      determine a future value of the parameter in a future portion of the time period that spans at least from an end of the sliding time window to the end time of the time period, based on a forecast of the parameter, and
      determine an output value of the parameter for the time period based on the past value, the current value, and the future value.

2. The method of Claim 1, wherein the parameter is power demand, and wherein each of the past value, the current value, the future value, and the output value is a value of peak power demand.

3. The method of Claim 2, further comprising using the at least one hardware processor to, after one or more of the plurality of advances of the sliding time window within the time period, set the determined output value as the peak power demand during operation of the power infrastructure site over a remaining portion of the time period.

**4.** The method of Claim 1, wherein the past value is an extremum of the parameter in the past portion of the time period, the current value is an extremum of the parameter in the current portion of the time period, and the future value is an extremum of the parameter in the future portion of the time period, and wherein determining the output value comprises selecting a most extreme value of the parameter from the past value, the current value, and the future value.

**5.** The method of Claim 1, wherein the time period is a fixed billing period for which a utility, which supplies power to the power infrastructure site, bills an operator of the power infrastructure site for power used by the power infrastructure site.

**6.** The method of Claim 1, wherein the start of the sliding time window corresponds to a current time, and wherein the end of the sliding time window corresponds to a future time within the time period.

**7.** The method of Claim 1, wherein the forecast of the parameter comprises a probability distribution of a value of the parameter in the future portion of the time period.

**8.** The method of Claim 7, wherein determining the future value comprises selecting a value of the parameter from the probability distribution based on a value of a risk tolerance parameter.

**9.** The method of Claim 8, further comprising using the at least one hardware processor to receive a user input indicating the value of the risk tolerance parameter.

**10.** The method of Claim 1, further comprising using the at least one hardware processor to execute a forecast model to generate the forecast of the parameter.

**11.** The method of Claim 1, further comprising using the at least one hardware processor to, after one or more of the plurality of advances of the sliding time window within the time period, set the determined output value as a control value for the power infrastructure site.

**12.** The method of Claim 11, further comprising using the at least one hardware processor to initiate control of the power infrastructure site, based on the output value determined after one or more of the plurality of advances of the sliding time window within the time period.

**13.** A system comprising:

at least one hardware processor; and
software configured to, when executed by the at least one hardware processor,

advance a sliding time window from a start time to an end time of a time period, in real time, wherein a length of the sliding time window is less than a length of the time period, and
after each of a plurality of advances of the sliding time window within the time period,

determine a past value of a parameter of a power infrastructure site that occurred in a past portion of the time period that spans at least from the start time of the time period to before a start of the sliding time window,
determine a current value of the parameter in the sliding time window, based on an operating configuration of the power infrastructure site output by a model for a current portion of the time period that spans the sliding time window,
determine a future value of the parameter in a future portion of the time period that spans at least from an end of the sliding time window to the end time of the time period, based on a forecast of the parameter, and
determine an output value of the parameter for the time period based on the past value, the current value, and the future value.

**14.** The system of Claim 13, wherein the parameter is power demand, and wherein each of the past value, the current value, the future value, and the output value is a value of peak power demand.

**15.** The system of Claim 14, wherein the software is further configured to, after one or more of the plurality of advances of the sliding time window within the time period, set the determined output value as the peak power demand during operation of the power infrastructure site over a remaining portion of the time period, wherein the time period is a fixed billing period for which a utility, which supplies power to the power infrastructure site, bills an operator of the power infrastructure site for power used by the power infrastructure site.

**16.** The system of Claim 13, wherein the past value is an extremum of the parameter in the past portion of the time period, the current value is an extremum of the parameter in the current portion of the time period, and the future value is an extremum of the parameter in the future portion of the time period, and wherein determining the output value comprises selecting a most extreme value of the parameter from the past value, the current value, and the future value.

**17.** The system of Claim 13, wherein the start of the sliding time window corresponds to a current time, and wherein the end of the sliding time window corresponds to a future time within the time period.

**18.** The system of Claim 13, wherein the forecast of the parameter comprises a probability distribution of a value of the parameter in the future portion of the time period, and wherein determining the future value comprises selecting a value of the parameter from the probability distribution based on a value of a risk tolerance parameter.

**19.** The system of Claim 13, wherein the software is further configured to, after one or more of the plurality of advances of the sliding time window within the time period, set the determined output value as a control value for the power infrastructure site.

**20.** A non-transitory computer-readable medium having instructions stored thereon, wherein the instructions, when executed by a processor, cause the processor to:

advance a sliding time window from a start time to an end time of a time period, in real time, wherein a length of the sliding time window is less than a length of the time period; and after each of a plurality of advances of the sliding time window within the time period,

determine a past value of a parameter of a power infrastructure site that occurred in a past portion of the time period that spans at least from the start time of the time period to before a start of the sliding time window, determine a current value of the parameter in the sliding time window, based on an operating configuration of the power infrastructure site output by a model for a current portion of the time period that spans the sliding time window, determine a future value of the parameter in a future portion of the time period that spans at least from an end of the sliding time window to the end time of the time period, based on a forecast of the parameter, and determine an output value of the parameter for the time period based on the past value, the current value, and the future value.

**FIG. 1**

**200**

FIG. 2

**FIG. 3**

Electricity Market Interface
152

Scheduling System
420

Telemetry System
430

Optimizer
410

112

Control System
142

Site Management System
440

**FIG. 4**

**FIG. 5**

<u>600</u>

START

Next Time
Period?
610

No → END

Yes

End of Time
Period?
620

Yes

No

Advance Sliding Time Window
630

Determine Past Value of Parameter
Preceding Sliding Time Window
640

Determine Current Value of Parameter in
Sliding Time Window
650

Determine Future Value of Parameter After
Sliding Time Window Based on Forecast
660

Determine Output Value of Parameter
Based on Past, Current, and Future Values
670

Model
680

Control Process
690

**FIG. 6**

Europäisches
Patentamt

European
Patent Office

Office européen
des brevets

# EUROPEAN SEARCH REPORT

Application Number

EP 22 21 4136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/090935 A1 (ASGHARI BABAK [US] ET AL) 29 March 2018 (2018-03-29) <br> * paragraphs [0003] – [0006], [0054] – [0072]; figures 1, 4-6 * <br> ----- | 1-20 | INV. <br> H02J3/00 <br> B60L53/63 <br> H02J13/00 |
| | | | TECHNICAL FIELDS SEARCHED (IPC) |
| | | | H02J <br> B60L |

The present search report has been drawn up for all claims

| Place of search | Date of completion of the search | Examiner |
|---|---|---|
| Munich | 7 September 2023 | Telega, Pawel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 21 4136**

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2023

| Patent document cited in search report | | Publication date | Patent family member(s) | | Publication date |
|---|---|---|---|---|---|
| US 2018090935 | A1 | 29-03-2018 | US | 2018090935 A1 | 29-03-2018 |
| | | | WO | 2018057906 A1 | 29-03-2018 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10647209 B2
- US 10320203 B2
- US 11262718 B2
- US 9840156 B2
- US 8762189 B2